(19) Europäisches Patentamt / European Patent Office / Office européen des brevets

(11) **EP 3 548 999 B1**

(12) **FASCICULE DE BREVET EUROPEEN**

(45) Date de publication et mention de la délivrance du brevet:
**18.11.2020 Bulletin 2020/47**

(21) Numéro de dépôt: **17811665.3**

(22) Date de dépôt: **28.11.2017**

(51) Int Cl.:
*G06F 3/039* (2013.01)  *A47B 21/03* (2006.01)

(86) Numéro de dépôt international:
**PCT/FR2017/053267**

(87) Numéro de publication internationale:
**WO 2018/100280 (07.06.2018 Gazette 2018/23)**

(54) **DISPOSITIF DE SOUTIEN DU POIGNET ET/OU DE L'AVANT-BRAS, NOTAMMENT TAPIS POUR SOURIS ET CLAVIER, ET UTILISATION D'UN FEUILLET À BULLES COMPRESSIBLE**

VORRICHTUNG ZUR UNTERSTÜTZUNG DER HANDGELENK UND / ODER UNTERARM, INSBESONDERE MAUS- UND TASTATUR-TEPPICHE, UND VERWENDUNG EINES KOMPRIMIERBAREN BLASBLATTES

DEVICE FOR SUPPORTING THE WRIST AND / OR FOREARM, ESPECIALLY MOUSE AND KEYBOARD PADS, AND USE OF A COMPRESSIBLE BUBBLE SHEET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2016 FR 1661883**

(43) Date de publication de la demande:
**09.10.2019 Bulletin 2019/41**

(73) Titulaire: **VAHIDA, Behzad**
**F-91240 Saint Michel Sur Orge (FR)**

(72) Inventeur: **VAHIDA, Behzad**
**F-91240 Saint Michel Sur Orge (FR)**

(74) Mandataire: **Guérin, Jean-Philippe**
**Opilex**
**32 rue Victor Lagrange**
**69007 Lyon (FR)**

(56) Documents cités:
**US-A- 5 374 018**    **US-A1- 2001 009 263**
**US-A1- 2009 254 016**

**Description**

La présente invention concerne le domaine des équipements ergonomiques pour limiter la fatigue et l'apparition de douleurs. L'invention concerne plus précisément, un dispositif de soutien du poignet et/ou de l'avant-bras utilisable dans une situation de travail. L'invention concerne également une utilisation d'un feuillet à bulles dans un dispositif de soutien du poignet et/ou de l'avant-bras.

L'utilisation de périphériques informatiques, tels que la souris ou le clavier, reste inconfortable encore de nos jours. En effet, des positions indésirables de l'avant-bras ainsi que des surpressions sur les poignets créent de la fatigue et des douleurs, notamment au niveau du canal carpien.

Différentes solutions ont été proposées pour pallier ce problème et limiter ces désagréments. Ainsi, des souris de conception « verticale » permettent de redresser la main et conduisent à une meilleure position de l'avant-bras.

Sont également commercialisés des tapis de souris ergonomiques composés de matériaux souples et déformables tel que des mousses plastiques, ou comportant des coussinets remplis de gel ou composés de mousse plastique dans la zone d'appui du poignet.

Un exemple d'un dispositif de l'art antérieur est fourni par le brevet US5374018.

Ces tapis présentent des inconvénients. Par exemple, ceux en mousse plastique ne sont pas d'un grand confort d'utilisation du fait du comportement particulier de la mousse sous la souris. Il y a aussi des aspects liés à la durabilité de la mousse, à la propreté (accumulation de germes et de saletés) ainsi qu'à des odeurs chimiques dégagées par le matériau.

La notion même d'adjoindre un coussinet repose-poignet est de plus en plus critiquée. En effet, l'effet bénéfique du redressement de la main est contré par la pression concentrée exercée dans la zone du poignet où passe le canal carpien. De plus, la position de la main de l'utilisateur est alors contrainte et limitée sur le tapis, le poignet devant se poser sur des zones d'appuis prédéfinies du coussinet.

Les solutions proposées à ce jour, nombreuses, restent ainsi imparfaites. Les équipements associés aux claviers et ayant pour but de les rendre plus ergonomiques sont également nombreux et variés mais l'amélioration du confort reste limitée.

L'invention vise à obtenir un dispositif de soutien du poignet et/ou de l'avant-bras qui permet de réduire efficacement la pression exercée sur les poignets en minimisant en pratique les contraintes de positionnement pour les utilisateurs.

A cet effet, l'invention concerne un dispositif de soutien du poignet et/ou de l'avant-bras, notamment sous la forme d'un tapis pour souris bureautique ou clavier, tel que défini dans la revendication 1 annexée.

Il est ainsi permis au dispositif de former un repose-poignet ou repose-avant-bras confortable et sans encombrement contraignant. Après que l'utilisateur a retiré son poignet ou son avant-bras, la zone de soutien peut reprendre une forme nominale, grâce à un effet de rappel élastique exercé dans la couche de redistribution de pression (chacune des bulles comprimées et élargies retournant à une forme initiale).

Avec ce type d'agencement, on définit un feuillet compressible à bulles, chaque bulle correspondant à une cellule fermée qui peut se déformer grâce aux zones d'espacement entres les bulles. Ce type de dispositif présente une grande efficacité pour redistribuer la pression exercée par le poignet, tout en présentant une épaisseur très réduite, par exemple inférieure ou égale à 12 mm et typiquement de l'ordre de 5 ou 10 mm.

L'invention porte également sur les variantes des revendications dépendantes. L'homme du métier comprendra que chacune des caractéristiques des variantes des revendications dépendantes peut être combinée indépendamment aux caractéristiques des revendications indépendants, sans pour autant constituer une généralisation intermédiaire.

Les bulles sont des cellules fermées qui se déforment tout en gardant un volume quasi constant. Dans les modes de réalisation préférés, elles sont avantageusement de forme tassée, avec une faible hauteur mesurée suivant le sens de l'épaisseur du dispositif, afin de générer une épaisseur minimale du dispositif. De telles bulles, cylindriques ou en demi-ellipsoïdes, peuvent ainsi avoir une épaisseur de l'ordre de 2 à 5 mm seulement pour un diamètre de 5 à 20 millimètres.

Le feuillet à bulles a une construction discrétisée, composée d'une multitude de bulles disposées de façon globalement régulière dans un plan. Les bulles peuvent être remplies de fluide gazeux (de préférence de l'air) ou liquide, ou éventuellement de gel.

Cette structure discrétisée et optionnellement ordonnée des bulles (sans écartement trop important entre les bulles) confère au dispositif de multiples avantages, comparé aux solutions existantes de type mousse ou coussinet de gel. Cette structure permet par exemple de définir un tapis de souris ou de clavier à redistribution de pression, comprenant un ou plusieurs feuillets à bulles.

Dans le cas de mousses synthétiques, les bulles internes -ouvertes ou closes-sont très petites et disposées de façon aléatoire au sein de la matrice de la mousse. La déformation ainsi que la redistribution de pression ne sont donc pas bien maîtrisées.

Quant au coussinet de gel, comme son nom l'indique la poche remplie de fluide doit avoir une pression suffisante, ce qui lui confère une forme en coussin. Cela empêche toute application comme tapis de souris ou autre dispositif suffisamment plan. L'application se limite en pratique au coussinet repose-poignet, avec une ergonomie discutable.

L'agencement prévu avec de nombreuses bulles, par exemple au moins une bulle par cm² dans la couche de redistribution de pression, permet de limiter la déformation locale liée à la pression de contact puisque le fluide d'une bulle ne peut pas être transféré ailleurs que dans la cellule correspondante. Autrement dit, il est permis d'obtenir un dispositif, par exemple sous la forme d'un tapis, qui reste sous la forme d'une couche mince, sans modification notable de son épaisseur dans les différents cas de figure d'utilisation.

De préférence, les bulles ont une même épaisseur dans une configuration non sollicitée au repos du dispositif et appartiennent à au moins un feuillet compressible qui résulte de l'assemblage entre la première pièce de film et la deuxième pièce de film, le feuillet compressible présentant une épaisseur déterminée essentiellement définie par l'épaisseur des bulles.

Dans certaines options, notamment compatibles avec une plus grande épaisseur du dispositif, plusieurs feuillets à bulles peuvent être superposés. L'épaisseur peut toutefois être optimisée en formant dans les feuillets respectifs des bulles dont le format nominal (suivant une section en coupe verticale) est plus proche d'une demi-ellipsoïde que d'un cylindre. Bien entendu, une pièce de film peut être plus épaisse ou être remplacée par une couche de matière plastique, par exemple si on souhaite que la couche supérieure formant le revêtement de protection soit directement formée par le feuillet compressible tout en présentant une résistance suffisante ou si on souhaite superposer deux couches à bulles avec une seule pièce intermédiaire plus épaisse que les autres pièces de film afin de séparer les bulles de la sous-couche supérieure des bulles de la sous-couche inférieure.

Dans des formes de réalisation, au moins deux dimensions (largeur et/ ou longueur) du feuillet à bulles supérieur sont plus petites que celle du feuillet à bulles placé en position inférieure, ce qui permet de rehausser localement une zone de support du poignet.

Alternativement, le dispositif de soutien intégrant le feuillet à bulles peut être défini comme une couche en relief formée sur un support de plus grandes dimensions, ce support sous-jacent formant par exemple un tapis de souris (pourvu ou non d'un feuillet à bulles) avec une zone de glisse décalée par rapport à la zone du dispositif pour réaliser la fonction de soutien du poignet ou de l'avant-bras.

Un dispositif de soutien du poignet et/ou de l'avant-bras selon l'invention peut comporter indépendamment l'une ou plusieurs des caractéristiques suivantes :

- les bulles sont alignées dans des rangées parallèles et sont de préférence espacées par rapport aux bulles d'une rangée adjacente ;
- les bulles sont alignées dans des rangées parallèles et sont de préférence espacées entre elles au moins au sein d'une même rangée ;
- les bulles sont entièrement espacées les unes par rapport aux autres ;

- la zone interconnectée qui s'étend entre les bulles a la même épaisseur que le feuillet compressible ;
- les bulles sont réparties de façon homogène, à la possible exception de zones de marges éloignées de la surface prévue pour soutenir le poignet et/ou l'avant-bras ; ainsi, aucune zone n'est différenciée par rapport aux autres pour la portion utile de soutien ; le comportement du dispositif peut être homogène en ayant une répartition régulière des bulles sans variation des espaces entre les bulles.
- les bulles appartiennent à un même feuillet monocouche et c'est une membrane fine, définie par l'un au moins de la première pièce de film et la deuxième pièce de film, qui permet de relier les bulles entre elles, de façon similaire au papier bulle. Cette membrane fine constitue une partie structurelle définissant la géométrie du réseau de bulles.
- un plan commun aux bulles du feuillet est défini par la membrane de film qui sert à relier les bulles entre elles.
- il est prévu une variation de la taille des bulles, par exemple avec une première série de bulles d'une première taille, avec un diamètre plus important, et une deuxième série de bulles d'une deuxième taille, avec un deuxième diamètre plus petit que le premier diamètre, l'épaisseur des bulles restant sensiblement la même.
- une répartition en quinconce est prévue entre les bulles de la première série et les bulles de la deuxième série.
- une répartition dans différentes rangées et/ou dans différentes sous-couches est prévue entre les bulles de la première série et les bulles de la deuxième série.
- le matériau des pièces d'enveloppement pour délimiter les bulles peut être une substance plastique comme le polyéthylène (de préférence le polyéthylène basse densité, le polyéthylène de basse densité linéaire) dans des options préférées, qui est bien adapté pour des opérations de soudure à chaud entre la première pièce de film et la deuxième pièce de film.
- l'épaisseur de chacune des pièces de film peut être comprise entre 50 $\mu$m et 150 $\mu$m, de préférence entre 70 $\mu$m et 120 $\mu$m.
- l'épaisseur de chacune des pièces de film peut être inférieure à 10% de l'épaisseur du feuillet compressible, et de préférence inférieure ou égale à 5% de l'épaisseur du feuillet compressible.
- le dispositif comporte une enveloppe étanche au moins dans deux parois principales opposées parallèles au feuillet compressible ;
- à l'intérieur de l'enveloppe, le fluide complémentaire peut circuler dans la zone interconnectée, l'enveloppe étant de préférence complètement étanche (hermétique aux gaz) ;
- l'enveloppe étanche s'étend entièrement à l'extérieur des première et deuxième pièces de film ou inclut l'une des deux pièces de film.

- le fluide complémentaire renfermé par l'enveloppe étanche et extérieur aux bulles est typiquement de l'air et/ou est un fluide différent de celui remplissant les cellules fermées pour définir les bulles.

- l'enveloppe contenant le fluide complémentaire peut présenter des ouvertures permettant à de l'air, formant le fluide complémentaire, de s'échapper.

- les ouvertures pour l'échappement d'air sont définies, à titre préférentiel, exclusivement dans une zone annulaire circonférentielle (pourtour) du dispositif.

- des valves souples sont prévues et associées aux ouvertures afin de rendre plus progressives les variations de débit d'entrée et de sortie de l'air.

- le dispositif se présente sous la forme d'un tapis ou sous la forme d'un revêtement accolé à un tapis, sur le dessus,

- la face supérieure du tapis est généralement plane, ce qui permet de ne pas perturber la glisse et le bon fonctionnement de la souris pour une application de tapis de souris.

- la zone interconnectée est extérieurement délimitée par une paroi périphérique qui s'étend depuis une base du dispositif jusqu'à la couche supérieure formant le revêtement de protection, de préférence en définissant une circonférence du tapis,

- le fluide complémentaire du fluide des bulles est apte à circuler dans la zone interconnectée, en étant enveloppé de manière complètement étanche et hermétique aux gaz dans une enveloppe de la couche de redistribution de pression ;

- le fluide complémentaire du fluide des bulles est de l'air apte à entrer dans et sortir de la zone interconnectée, par des valves souples mobiles ;

- le revêtement de protection est supporté par la couche de redistribution de pression, de sorte qu'il peut se comporter comme une membrane élastique (le comportement d'ensemble résulte du couplage entre cette membrane élastique et la couche de redistribution de pression) ; le revêtement de protection se courbe de façon générale, de préférence sans créer d'alternances de creux et de bosses, sachant qu'une déformabilité trop importante de la couche supérieure du dispositif peut gêner la glisse de la souris et conduire à un manque de précision dans le positionnement de la souris et du curseur.

- les bulles sont des cellules fermées qui conservent un volume quasi constant, l'élargissement (quasi aplatissement) de ces bulles correspondant à un changement de conformation et n'engendrant quasiment pas d'étirement des pièces de film constituant le feuillet compressible ; autrement dit le caractère compressible dans le sens transversal au feuillet est permis par la capacité des bulles à s'élargir en diminuant de hauteur, cette déformation pouvant être localisée dans la zone de soutien du poignet ou de l'avant-bras, tandis que la partie sur laquelle la souris se déplace ne se déforme que de façon imperceptible (on comprend qu'une surface plane produit la meilleure réponse au faisceau de lumière émis typiquement par la souris).

- la couche supérieure formant le revêtement de protection présente une résistance au poinçonnement supérieure à celle de la couche de redistribution de pression, et en particulier plus élevée que la résistance au poinçonnement d'un feuillet compressible de cette couche.

- pour un meilleur confort, le revêtement de protection peut avantageusement procurer une bonne aération et être anti-transpirant ; il peut par exemple être réalisé en cuir naturel.

- le revêtement de protection est imperméable aux liquides (typiquement sans propriété d'absorption de liquides aqueux) ; il est en outre lavable et épongeable dans des formes de réalisation préférées.

- le revêtement de protection est dépourvu de mousse.

- les bulles sont espacées entre elles d'une distance minimale au moins égale à 1 ou 2 mm, cette distance minimale étant inférieure à un diamètre ou diamètre équivalent des bulles, mesuré suivant un plan du dispositif (plan du tapis par exemple).

- le dispositif présente en outre une surface inférieure antidérapante et/ou pourvue d'une couche adhésive ; ceci permet un maintien ferme sur une surface d'un meuble quelconque dans le cas d'une application de tapis ou sur la surface d'un support, par exemple dans le cas d'une application de revêtement d'un clavier ou d'une extension d'un clavier. L'adhérence sera ainsi améliorée pour la base du dispositif, contrairement à la face supérieure.

- le dispositif présente une face supérieure au moins en partie définie par le revêtement de protection et une face inférieure dont la surface est plus antidérapante que la face supérieure.

- la couche supérieure formant le revêtement de protection est flexible pour transmettre localement à des bulles du feuillet compressible une pression exercée par le poignet d'un utilisateur, par exemple pendant une manipulation d'une souris ou d'un clavier de commande.

- le feuillet compressible à bulles est amovible, ce qui peut permettre de procéder à des opérations de rechange d'un feuillet défectueux (bulles crevées suite à des impacts ou à du poinçonnement) ou usé par les sollicitations au cours du temps, ou encore pour insérer au choix des feuillets à bulles avec des propriétés de redistribution de pression différentes (cas d'un kit à monter par exemple).

- dans une construction entièrement modulaire, le kit en sandwich peut être constitué d'éléments suivants :

  - un revêtement de protection,
  - une ou plusieurs couches de redistribution de pression pouvant être pourvues chacune d'une enveloppe de protection,

- en option, un feuillet semi-rigide pouvant être placé à différents niveaux dans le sandwich,
- une couche fonctionnelle d'adhérence pour la face inférieure.

- l'enveloppe externe, par exemple étanche pour renfermer un fluide complémentaire, s'ouvre sur trois côtés, afin de pouvoir insérer et positionner le feuillet compressible à bulles de façon aisée et le solidariser à l'enveloppe ; en effet, il est préférable que le feuillet et l'enveloppe soient solidaires, afin d'éviter que le feuillet à bulles ne se déplace à l'intérieur de l'enveloppe.
- des moyens d'accrochage du feuillet à l'enveloppe sont prévus et peuvent être de type scratch, colle détachable ou couche adhésive détachable, points de retenue dans quatre angles du dispositif lorsque le dispositif a un format rectangulaire.
- l'enveloppe externe présente, ailleurs que sur une face supérieure de l'enveloppe, un système d'ouverture/fermeture permettant d'accéder au feuillet.
- le système d'ouverture/fermeture est disposé en périphérie de l'enveloppe et peut être, par exemple, de type fermeture à glissière.
- les faces supérieure et inférieure de l'enveloppe externe définissent les faces supérieure et inférieure du dispositif et sont différenciés au moins par la présence d'une surface de glisse du côté de la face supérieure, optionnellement avec la présence d'une couche décorative (par exemple sous forme de bande collée).
- une feuille rigide est ajoutée, en dessous du feuillet compressible, pour définir la face inférieure du dispositif et/ou rigidifier la base du dispositif.
- deux feuillets superposés sont séparés entre eux par un film intermédiaire, lequel est apte à se déformer en tension lors du passage vers une conformation plus élargie des bulles situées sous la zone de contact avec le poignet ;
- l'élément de recouvrement consiste en une pièce de film qui est :

  - fixée à une pièce de film déterminée du feuillet compressible;
  - plus mince que le feuillet compressible ; et
  - utilisée pour délimiter la couche de redistribution de pression, en restant en contact avec la pièce de film déterminée dans une pluralité de zones espacées les unes des autres correspondant aux emplacements des bulles respectives.

Un autre objet de l'invention est de proposer un clavier de saisie ergonomique et pouvant réduire efficacement la pression exercée sur un poignet d'un utilisateur, tel que défini dans la revendication 11 annexée.
A cet effet, il est proposé un clavier pourvu d'au moins une zone de saisie appelée également zone de travail, par exemple dans laquelle se trouvent une pluralité de touches de saisie activables par une pression (par exemple mobiles sous l'effet d'une pression) et/ou un pavé tactile, le clavier incluant le dispositif selon l'invention, lequel dispositif se présente sous la forme d'une membrane qui recouvre tout ou partie de ladite zone de saisie et/ou une surface d'appui pour le poignet d'un utilisateur, rigide et adjacente à la zone de saisie.
Selon une particularité, le revêtement de protection et le feuillet compressible sont transparents ou translucides, au moins dans une ou plusieurs zones respectives de recouvrement de la zone de saisie (par exemple dans la ou les zones de recouvrement de tout ou partie des touches de saisie). Le dispositif peut alors se présenter sous la forme d'une membrane permettant une visualisation des touches de saisie ou autre portion de saisie du clavier, au travers de la membrane.
Un autre objet de l'invention, tel que défini dans la revendication 12 annexée, est de proposer une utilisation d'un feuillet compressible dans un dispositif de soutien du poignet et/ou de l'avant-bras, notamment un dispositif sous la forme d'un tapis pour souris et clavier, sachant que le feuillet compressible est intégré sous un revêtement de protection, déformable, formant un dessus du dispositif, le feuillet compressible étant du type à bulles, résultant de l'assemblage de deux pièces de film et conçu pour fléchir de manière élastique en réponse à une pression exercée sur le dessus du dispositif afin de définir une couche de redistribution de pression s'étendant parallèlement au revêtement de protection, sachant que le revêtement de protection présente une résistance au poinçonnement supérieure à celle du feuillet compressible, les bulles du feuillet compressible qui s'étendent dans un plan commun ayant une même épaisseur dans une configuration non sollicitée au repos du dispositif, le feuillet compressible présentant de préférence une épaisseur déterminée essentiellement définie par l'épaisseur des bulles.
Selon une particularité, le dispositif de soutien comprend une face inférieure de type antidérapante prévue pour adhérer sur une surface d'un bureau (meuble), d'une desserte informatique ou d'une table.
Selon une particularité, le dispositif de soutien est sous la forme :

- d'un accoudoir monté solidaire d'une chaise de bureau ou d'un siège ;
- ou d'une extension montée horizontalement et rendue solidaire d'un bureau, d'une desserte informatique ou d'une table.

D'autres caractéristiques et avantages de l'invention apparaîtront au cours de la description suivante de plusieurs de ses modes de réalisation, donnés à titre d'exemples non limitatifs, en regard des dessins joints dans lesquels :

- la figure 1 illustre un dispositif de soutien conforme à un premier mode de réalisation de l'invention ;
- la figure 2 est une vue en coupe illustrant un feuillet à bulles utilisé dans le dispositif de la figure 1 ;
- la figure 3 est une vue en coupe de la couche de redistribution de pression incluant le feuillet à bulles et utilisée dans l'enveloppe externe du dispositif de soutien de la figure 1 ;
- la figure 4A est une vue en coupe d'un dispositif de soutien selon un deuxième mode de réalisation qui fait intervenir deux feuillets à bulles ;
- la figure 4B est une vue en coupe similaire à celle de la figure 4A, illustrant la redistribution de pression sous le poignet d'un utilisateur ;
- la figure 5 est une vue en coupe montrant un dispositif de soutien selon un troisième mode de réalisation de l'invention ;
- la figure 6 est une vue d'un tapis de souris qui inclut un dispositif de soutien agencé dans une zone spécifique prévue pour le soutien du poignet ;
- la figure 7 est une vue en coupe d'un ensemble fonctionnel formé par un clavier d'ordinateur et son extension de support du poignet, illustrant une conformation d'un dispositif de soutien selon un quatrième mode de réalisation, permettant de recouvrir l'ensemble fonctionnel.

Sur les différentes figures, les mêmes références désignent des éléments identiques ou similaires. Certains éléments ou certaines dimensions, comme par exemple l'épaisseur, peuvent avoir été agrandis sur les dessins afin de faciliter la compréhension.

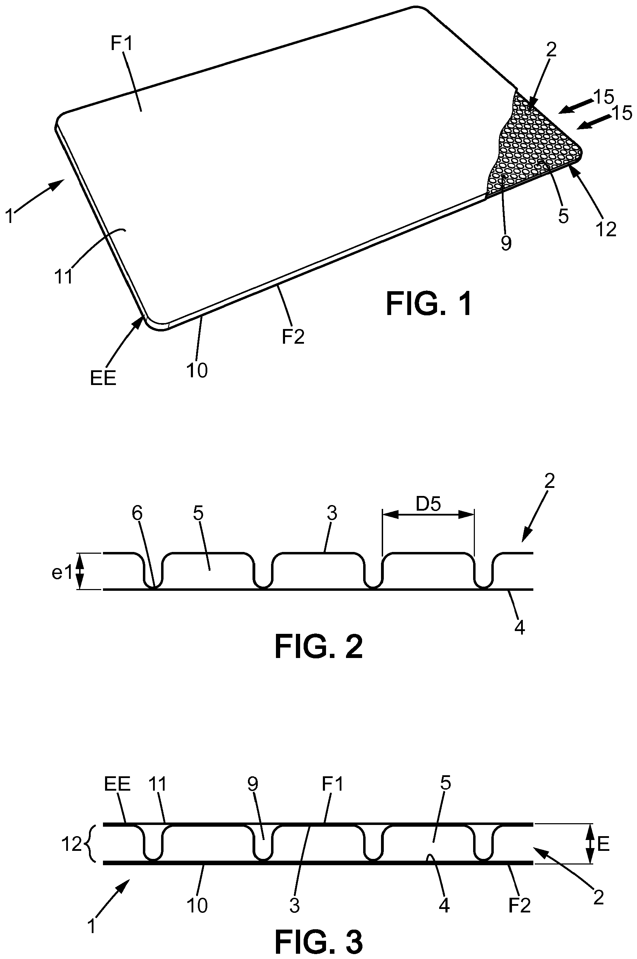

La figure 1 représente un premier mode de réalisation d'un dispositif de soutien 1 sur lequel peut venir se poser le poignet, ou éventuellement l'avant-bras, lors des phases de manipulation d'une souris d'ordinateur ou autre appareil de commande par pointage similaire. Ici, le dispositif de soutien 1 consiste en un assemblage, par exemple par laminage, de plusieurs couches dont au moins une couche de redistribution de pression 12 incluant au moins un feuillet compressible 2 du type à bulles 5. Une couche supérieure de protection forme un revêtement de protection 11. Ce revêtement de protection 11, déformable et formant un dessus du dispositif 1, peut faire partie de la couche de redistribution de pression 12, en recouvrant la zone en relief définie par les bulles du feuillet compressible 12. Ainsi, la face supérieure F1 du dispositif 1 est plane dans un état au repos du dispositif de soutien 1.

Dans l'exemple illustré sur la figure 1, le revêtement de protection 11 présente une face supérieure F1 qui peut définir la totalité du dessus du dispositif 1. A l'opposé de la face supérieure F1, il est prévu une face inférieure F2 qui est typiquement plus antidérapante que la face supérieure F1, par exemple en raison d'une rugosité supérieure, de la présence de portions adhésives, d'un effet ventouse ou autres caractéristiques structurelles affectant les propriétés de la surface inférieure du dispositif de soutien 1.

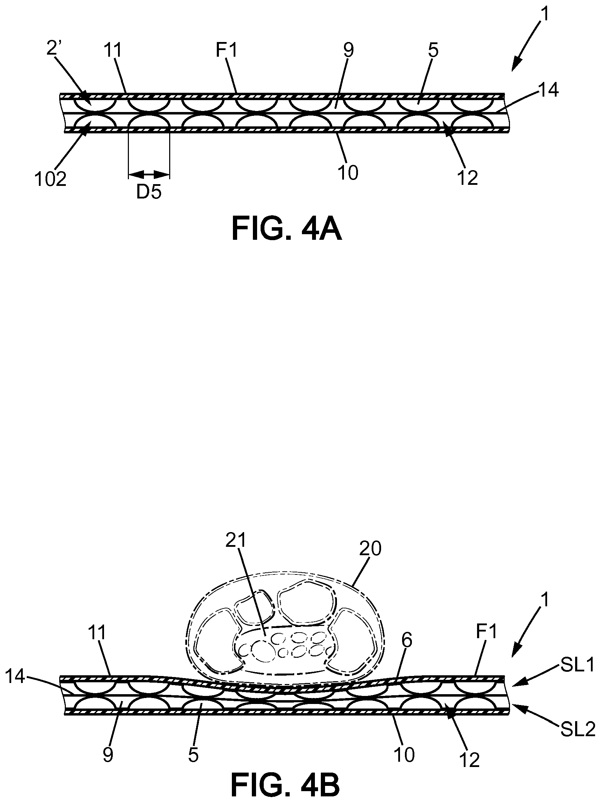

Il doit être compris que le revêtement de protection 11 est flexible pour transmettre localement aux bulles 5 du feuillet compressible 2 une pression exercée par le poignet 20 d'un utilisateur, comme bien visible par exemple sur la figure 4B.

Dans les formes de réalisation présentés sur les figures, le revêtement de protection 11 peut être mince (et optionnellement constituée d'un seul matériau), par exemple d'une épaisseur maximale inférieure à 2 mm, afin de pouvoir transmettre aux bulles 5 du feuillet compressible 2 l'essentiel des contraintes résultant de la pression sur le dessus du dispositif de soutien 1. Dans certaines variantes, on peut réaliser le revêtement de protection 11 sous la forme d'un laminé afin de cumuler différentes fonctions dans une couche de faible épaisseur, par exemple en incluant une couche imperméable (typiquement hydrophobe) de matériau barrière aux liquides, une couche de protection mécanique et éventuellement un revêtement décoratif qui facilite la glisse sur le dessus du dispositif 1.

En outre, l'un au moins parmi le revêtement de protection 11 et le feuillet compressible 2, ou éventuellement un élément additionnel entièrement ou partiellement raidisseur, peut présenter une mémoire de forme à 20°C. Ainsi, on comprend que le dispositif de soutien 1 peut se présenter avec un format mince, sans modification notable de son épaisseur totale E dans les différents cas de figure d'utilisation, à l'exception de la zone subissant directement la pression exercée par le poignet ou éventuellement par l'avant-bras.

En référence à la figure 2, il est représenté un feuillet compressible 2 qui comporte ici une première pièce de film 3 soudé, par exemple par soudage thermique, ultrasons ou fixé par une méthode similaire à une deuxième pièce de film 4. Ces pièces de film 3, 4 sont par exemple essentiellement à base de polyéthylène ou autre matériau plastique résistant adapté pour supporter des étapes de fixation à chaud, par ultrasons, sans que ce type d'option soit limitatif (notamment, un recours à un collage est également possible).

Une pluralité de bulles 5 est délimitée entre ces deux pièces de film 3, 4, le contenu de chaque bulle 5 consistant en un fluide, de préférence de l'air. Les zones annulaires 6 de soudure ou fixation comparable sont réalisées à un quelconque niveau. Bien que la figure 2 montre le cas d'une deuxième pièce de film 4 qui reste plane dans un état de repos, avec seulement la première pièce de film 3 qui enveloppe latéralement les bulles 5, on comprend que la liaison peut être réalisée plus haut, éventuellement en faisant en sorte que ce soit la première pièce de film 3 qui reste sensiblement plane dans un état de repos.

Les bulles 5, dont le diamètre D5 ou diamètre équivalent est supérieur à l'épaisseur e1 du feuillet compressible 2 et typiquement inférieur à 15 ou 20 mm, sont enveloppées :

- par le dessus, par la première pièce de film 3 qui est ici accolée à et s'étend le long du revêtement de protection 11 ; et
- par le dessous, par la deuxième pièce de film 4 qui est reliée à la première pièce de film 3 de façon étanche dans une pluralité de zones annulaires 6 définies chacune autour d'une des bulles 5.

Dans les conceptions des figures 1, 3 et 4A-4B, le dispositif 1 peut permettre de définir un tapis de souris. Pour cela, il est typiquement pourvu du revêtement de protection 11 et d'au moins un feuillet compressible 2 du type à bulles tel que montré sur la figure 2 (ici avec le raccordement entre les pièces de film 3 et 4). Il est généralement prévu que le feuillet compressible 2 soit intégré dans le volume interne d'une enveloppe externe EE qui peut résulter de l'association de la couche supérieure formant le revêtement de protection 11 avec une couche de base 10 distincte de la couche de redistribution de pression 12.

Afin de définir une face supérieure F1 plane, il est préférable que les bulles 5 présentent une même épaisseur dans une configuration non sollicitée au repos du dispositif 1, de sorte que le feuillet compressible 2 puisse occuper, dans la couche de redistribution de pression 12, un volume dont l'épaisseur e1 est constante.

Certaines formes de réalisation, avec ou sans une enveloppe externe EE distincte du feuillet compressible 2, peuvent permettre de superposer des feuillets ou de réaliser un feuillet compressible à plusieurs sous-couches de bulles 5. L'enveloppe externe EE illustrée sur la figure 1 permet par exemple de placer, de façon optionnelle, plusieurs feuillets 2 superposés l'un sur l'autre afin de rendre le tapis de souris plus souple. Ces feuillets 2 peuvent être collés l'un à l'autre pour une meilleure tenue d'ensemble.

Dans l'exemple non limitatif des figures 1 et 3, la couche de redistribution de pression 12 peut être uniquement définie par le feuillet compressible 2, un élément de recouvrement du feuillet compressible (ici placé au-dessus pour former le revêtement de protection 11) distinct des deux pièces d'enveloppement et le fluide complémentaire du fluide des bulles 5.

Ici, la couche de redistribution de pression 12 résulte de l'assemblage de trois pièces de film, en l'occurrence :

- deux pièces d'enveloppement formant un feuillet compressible 2 avec les bulles 5 ;
- l'élément de recouvrement qui recouvre le feuillet compressible 2 et permet de délimiter, avec le feuillet compressible 2, la zone remplie par le fluide complémentaire.

On comprend que le fluide complémentaire peut être délimité, et optionnellement maintenu enfermé, dans une enveloppe externe EE, et intercalé entre le feuillet 2 et l'élément de recouvrement formé ici par le revêtement de protection 11. L'enveloppe externe EE, étanche, peut résulter de l'assemblage du revêtement de protection 11 et d'une pièce inférieure qui peut être la pièce de film 4 participant à l'enveloppement ou une couche de base 10 additionnelle, distincte du feuillet 2. Le revêtement de protection 11 et la pièce inférieure peuvent être raccordés par exemple par une soudure périphérique continue.

Comme les bulles 5 sont espacées les unes par rapport aux autres, le fluide complémentaire est contenu dans une zone interconnectée 9 délimitée entre le revêtement de protection 11 et la première pièce de film 3. Ici, la zone interconnectée 9 présente avantageusement la même épaisseur que le feuillet compressible 2.

Bien que la zone interconnectée 9 soit ici extérieurement délimitée par une paroi périphérique définissant une circonférence du tapis et appartenant à l'enveloppe externe EE, on comprend qu'une telle zone interconnectée 9 peut alternativement être scellée uniquement par une bande annulaire formant une circonférence du dispositif 1 de soutien du poignet et/ou de l'avant-bras.

Par ailleurs, il peut être prévu que le feuillet compressible 2 soit hermétiquement scellé de façon périphérique, indépendamment de la présence ou non d'une enveloppe externe EE ou d'une bande annulaire formée sur la circonférence.

En référence aux figures 1 et 4A-4B, la face supérieure F1 peut être globalement plane et lisse, afin de ne pas perturber la glisse et le bon fonctionnement de la souris. La surface supérieure du dispositif de soutien 1 est choisie pour ne pas se déformer de façon excessive, une déformabilité trop importante pouvant gêner la glisse de la souris et conduire à un manque de précision dans le positionnement de la souris et du curseur. Autrement dit, la couche supérieure formant le revêtement de protection 11 peut être choisie pour générer une souplesse optimale dans le dispositif de soutien 1, juste ce qu'il faut pour garantir le confort de la main et du poignet 20, tout en assurant un déplacement aisé et précis de la souris sur ce dispositif 1.

En référence à la figure 1, les bulles 5 sont réparties en rangées parallèles 15 dans la couche de redistribution de pression 12. Dans le cas d'un tapis, celui-ci doit avoir une souplesse localisée suffisante pour redistribuer efficacement la pression exercée par le poignet 20 et générer un confort optimal dans la zone de contact du poignet 20 sur le tapis (zone de contact bien visible sur la figure 4B).

En référence aux figures 4A et 4B, une redistribution efficace de la pression exercée par le poignet 20 est obtenue, du fait du diamètre D5 nominal (diamètre dans un état non comprimé) des bulles 5 qui est typiquement inférieur à 15 ou 20 mm. Un poignet 20 d'une personne apte à manipuler une souris informatique peut alors être soutenu sur au moins 5 cm$^2$, et typiquement sur une zone de soutien Z2 de l'ordre de 10 cm$^2$. Dans l'exemple représenté sur la figure 4B, on peut considérer qu'une douzaine de bulles réparties dans trois rangées (une seule rangée étant représentée) de la sous-couche supérieure SL1 sont déformées en s'élargissant. Une autre douzaine de bulles réparties dans trois rangées (une seule rangée étant représentée) de la sous-couche inférieure SL2 sont également déformées. Il s'ensuit un effet de soutien avec suspension comparable à celui réalisé par un hamac, du fait de la présence d'au moins un fluide tel que l'air sous le poignet 20, tandis que les zones périphériques à la zone d'appui se trouvent à un niveau de hauteur normal. On réduit alors les sollicitations dans le tunnel carpien 21.

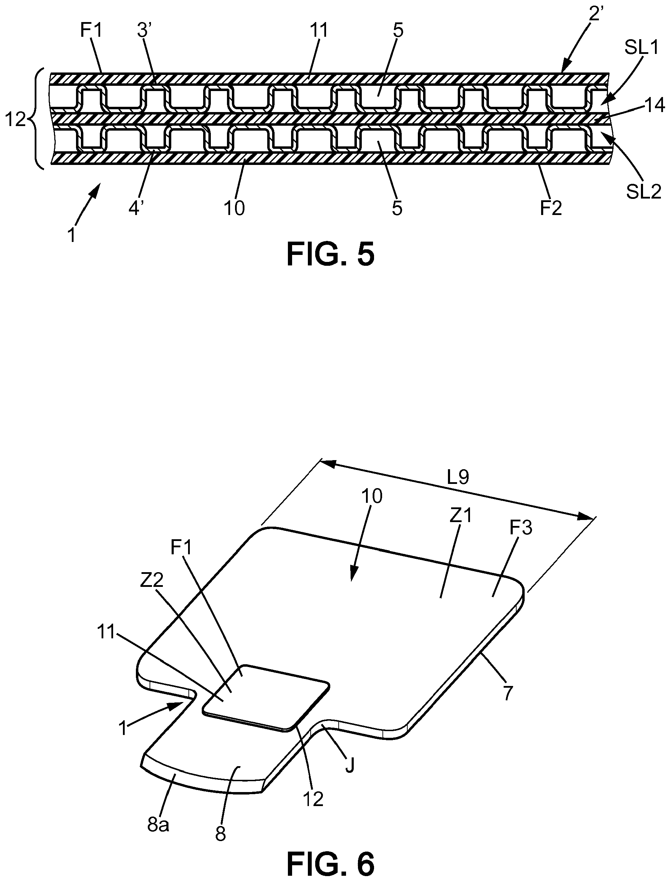

La figure 5 montre une disposition des bulles 5 entièrement comparable à celle des figures 4A et 4B, avec une configuration en deux sous-couches superposées SL1 et SL2. Cependant, le format de chaque bulle 5 est ici davantage cylindrique, contrairement au format en demi-ellipsoïdes prévu dans le dispositif 1 des figures 4A-4B. De plus, on prévoit ici que les bulles 5 soient enveloppées par des pièces ayant une épaisseur différente. En effet, les pièces de film 3', 4' sont plus minces que la couche de base 10 liée directement à la pièce de film 4' et que la couche supérieure formant le revêtement de protection 11 liée directement à la pièce de film 3'. La couche intermédiaire 14 est optionnelle et peut présenter une épaisseur supérieure ou égale à celle des pièces de film 3', 4'.

Dans des variantes, la disposition entre les bulles 5 des deux sous-couches SL1, SL2 peut être différente. Par exemple, il est être prévu un décalage qui contribue à obtenir une résistance distribuée de façon régulière. Egalement le feuillet compressible 2 peut présenter au moins une sous-couche qui présente des bulles 5 à section hexagonale et réparties en nid d'abeilles, avec un espacement de préférence sensiblement régulier entre les bulles 5.

Comme représenté sur la Fig. 5, un feuillet compressible 2 dont les bulles 5 sont présentes dans deux sous-couches SL1, SL2 est utilisable pour former l'essentiel de la partie de soutien du poignet et/ou de l'avant-bras, et peut éventuellement permettre de réaliser la totalité du dispositif 1. Ici les deux sous-couches SL1, SL2 comportent des bulles 5 dont le contenu peut consister en de l'air ou fluide analogue permettant d'élargir les cellules fermées dans un état contraint résultant de l'application d'une pression. Ici chaque sous-couche SL1 et SL2 est formée par utilisation d'une bande ou une couche de matériau plastique (polymère) respectif permettant de former :

- la couche de base 10, du côté de la sous-couche inférieure SL1 ;
- la couche de protection supérieure 11, du côté de la sous-couche supérieure SL2.

Le matériau des couches 10 et 11 est respectivement lié à une pièce de film 3', 4' conformée pour délimiter un film à bulles respectif. Les deux sous-couches SL1, SL2 sont séparées par une couche ou bande supplémentaire formant une couche intermédiaire 14 à laquelle les pièces de film 3' et 4' peuvent être liées, notamment par l'application d'un adhésif, d'un traitement thermique ou d'ultrasons.

A présent en référence à la figure 6, on peut voir un mode de réalisation d'un dispositif 1 de soutien du poignet, dans lequel la zone de soutien pour la main Z2 est surélevée par rapport à une zone de travail Z1 correspondante, ici pour une application de tapis de souris. Le feuillet compressible 2 du dispositif 1 est défini comme une couche en relief formée sur un support de plus grandes dimensions, ce support formant le tapis de souris qui peut être pourvu ou non d'un autre feuillet à bulles. La structure de la zone de soutien Z2 peut être celle de la figure 3, de la figure 4, de la figure 5 ou peut correspondre à une autre forme de réalisation avec des bulles 5 enveloppées entre deux feuilles. La face supérieure F3 définie dans la zone de travail Z1 peut optionnellement présenter, dans ce type de cas, un caractère plus glissant que la face supérieure F1.

Dans certaines variantes de réalisation, la surélévation dans la zone repose-poignet ou dans une autre zone peut résulter de l'implémentation de bulles plus grandes et/ou d'un nombre plus élevé de couches ou sous-couches superposées. Un coussinet saillant peut optionnellement être défini en faisant ainsi varier le nombre ou la taille des bulles dans le sens de la hauteur. Le dispositif 1 peut aussi optionnellement constituer un repose-poignet, équipement ergonomique indépendant dépourvu d'une surface de travail pour une souris.

Dans le cas de la figure 6, le tapis présente ici une extension 8, sensiblement plane, plus étroite qui peut être réalisée d'une pièce avec la partie plane de support de la souris. Le tapis présente alors davantage de bords qu'un tapis de format général rectangulaire, du fait de l'extension 8 qui fait saillie sur l'un des côtés, qui est le côté dit proximal par rapport à la position de l'utilisateur. Le bord étroit proximal 8a de l'extension, qui représente par exemple une largeur L8 comprise entre 6 et 13 cm, est plus étroit dans cette option que la largeur maximale L9 de la zone de travail Z1.

Un chanfrein est visible sur le bord 8a sur la figure 6. On comprend que ce type de chanfrein ou un arrondi prévu sur la bordure externe du dispositif 1 peut permettre d'éviter de former un bord abrupt et procure un meilleur confort. Le feuillet compressible 2 du dispositif 1 est par exemple agencé au moins dans une zone de jonction entre l'extension 8 et la partie plane de support de la souris, ou de façon adjacente à cette zone de jonction J. Ce type de disposition peut permettre un confort amélioré sans pour autant former une surélévation excessive qui contraindrait trop la position de la main de l'utilisateur. En particulier, on comprend que l'application d'une pression locale dans la zone de soutien Z2 n'engendre aucune déformation dans la zone de travail Z1, avec un minimum de transfert de pression et de déformation vers les autres zones du tapis. Cet effet bénéfique est également obtenu dans les options où le feuillet compressible 2 s'étend sur la totalité du tapis montré sur la figure 6, sans générer le moindre relief pour la zone de soutien Z2. Dans ce cas la totalité du tapis peut être définie par le dispositif 1.

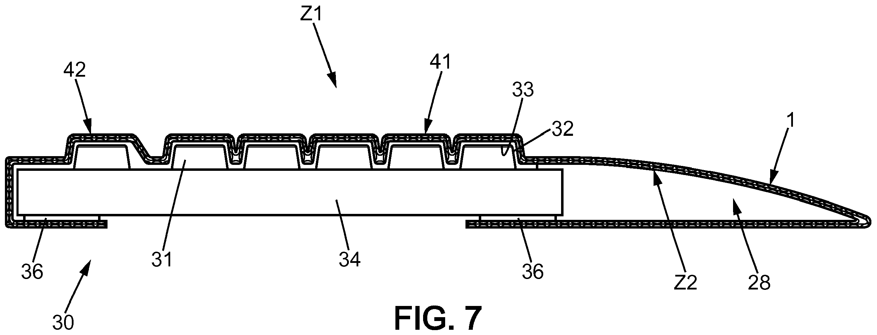

En référence à la figure 7, il est permis d'utiliser le feuillet compressible 2 pour redistribuer la pression exercée par le poignet dans une zone de soutien Z2 définie par l'extension 28 d'un clavier 30, en particulier d'un clavier 30 ayant des touches de saisie 31 mobiles par rapport au châssis 34 de support sous l'effet d'une pression. Comme dans le cas de la figure 6, l'extension 28 permet de former une surface d'appui située entre l'utilisateur et la zone de travail de la main.

Le dispositif de soutien 1 peut optionnellement se présenter sous la forme d'une membrane qui recouvre tout ou partie des touches de saisie 31 et/ou la zone de soutien Z2 correspondant à la surface d'appui pour le poignet d'un utilisateur. Ici, la surface d'appui formée par l'extension 28 peut être rigide, comme le châssis 34 du clavier 30 et adjacente à une rangée des touches de saisie 31. La membrane présente, pour chaque relief enveloppant une touche 31, une flexibilité qui permet d'accompagner le déplacement des touches 31. La ou les ouvertures qui existent entre le châssis 34 et les touches individuelles 31 permet l'enfoncement des touches au travers du cadre du châssis 34 afin de générer le signal de commande approprié.

Dans le cas de la figure 7, la membrane définie par le dispositif 1 présente des groupements 41, 42 d'enveloppement en trois dimensions ayant une conformation prédéfinie pour envelopper les touches 31, le cas échéant en venant longer la paroi latérale 32 de chacune des touches 31. La partie supérieure ou sommet 33 des touches 31 est ainsi recouvert par la membrane. Lorsque le feuillet compressible 2 s'étend dans la totalité de la membrane, on peut alors obtenir un effet d'amortissement de l'impact sur les doigts.

En outre, le recouvrement par une membrane contribue à la propreté et à la durabilité du clavier 30, en empêchant l'encrassement et l'accumulation de saletés sous les touches 31. On comprend que le fait de recouvrir des touches de saisie 31 mobiles, par une membrane d'un seul tenant, permet d'empêcher l'insertion d'impuretés solides ou de liquide au travers des ouvertures du clavier 30, ce qui supprime le risque qu'une touche se bloque ou ne soit plus fonctionnelle par altération d'un élément de circuit de conversion électronique associé à une des touches 31.

Dans la partie de la membrane qui recouvre la zone de travail Z1, en particulier au niveau des touches de saisie 31, on peut prévoir que le revêtement de protection 11 et la totalité du feuillet compressible 2 soient transparents ou translucides, de façon à permettre une visualisation des touches de saisie 31 au travers de la membrane.

Bien que la figure 7 montre une réalisation où toute la surface supérieure du clavier 30 est recouverte d'un tapis à bulles ou dispositif 1 similaire recouvrant la zone de soutien Z2 pour le poignet, la membrane peut alternativement seulement recouvrir l'extension 28. Par ailleurs dans certaines variantes, les touches 31 peuvent y être différenciées en disposant les bulles 5 différemment au droit de chaque touche 31.

La surface inférieure du dispositif 1 est ici pourvue d'une couche adhésive 36 répartie dans des zones espacées pour se fixer sur le dessous du châssis 34. Bien entendu, la fixation peut se faire de façon différente, de préférence par une fixation repositionnable. Des organes mécaniques, par exemple sous la forme de languettes saillantes de l'extension 28 et/ou du clavier 30, s'engageant dans des fentes du dispositif 1, peuvent alternativement être prévus pour réaliser la fixation de façon typiquement amovible.

Le recours à un revêtement transparent n'est pas une option seulement applicable dans le cas du recouvrement de touches 31. Plus généralement, l'enveloppe EE d'un dispositif formant un tapis ou une couche supérieure 11 peut être transparente afin que les bulles 5, typiquement des bulles d'air, soient visibles. Cela procure un effet non seulement esthétique mais aussi ludo-pédagogique, dévoilant le comportement des bulles 5 sous l'action de la pression.

Dans le feuillet compressible 2 qui fait partie du dispositif 1 de soutien (que ce dispositif 1 définisse un tapis de souris, une membrane de recouvrement d'un périphérique de saisie ou autre application permettant de soutenir le poignet ou l'avant-bras), on comprend que les bulles 5 peuvent présenter une certaine variété dans leur répartition ou leur format. Ainsi, les bulles 5 au sein d'un feuillet 2 peuvent ne pas être circulaires. C'est le cas par exemple de formes de réalisation avec des bulles elliptiques ou oblongues.

Les bulles 5 peuvent aussi ne pas être réparties de façon homogène dans le feuillet 2, par exemple en formant des bulles 5 de diamètres et/ou d'espacements différents. Ceci permet d'avoir des zones différenciées, par exemple une zone plus souple sous le poignet 20, avec des bulles plus larges et plus espacées, et une zone plus raide au droit de la souris, avec des bulles plus petites et plus serrées. Dans ce cas, pour les applications de tapis de souris notamment, une couleur différente et/ou un marquage approprié, peut optionnellement servir à indiquer la zone dédiée au poignet 20 et celle dédiée à la souris.

Par ailleurs, le dispositif 1 peut comporter un ou plusieurs "raidisseurs", c'est-à-dire des éléments de stabilisation de forme (à la manière d'un squelette ou ossature analogue). Dans sa réalisation particulièrement simple, le raidisseur peut être plan et il est placé en partie inférieure d'un tapis définissant le dispositif 1. Dans une variante, le raidisseur peut être positionné dans le plan médian du tapis, c'est-à-dire à mi-hauteur. Dans ce cas, une disposition similaire à celle de la figure 5 peut convenir, par exemple en remplaçant la couche intermédiaire 14 par une couche plus structurelle au moins dans certaines parties. On comprend que deux feuillets 2 à bulles 5 peuvent recouvrir dans ce cas les deux faces du raidisseur intégré dans le plan médian.

Plus généralement, un raidisseur peut être réalisé en matériau plus ou moins raide, être articulé ou être à mémoire de forme. Il peut aussi servir à créer une topologie de surface donnée, avec par exemple une ou plusieurs protubérances afin de créer une zone reposepoignet.

Il doit être évident pour les personnes versées dans l'art que la présente invention permet des modes de réalisation sous de nombreuses autres formes spécifiques sans l'éloigner du domaine d'application de l'invention comme revendiqué.

Ainsi, bien que le dispositif de soutien 1 montré sur les figures est généralement plan, en étant rapporté ou simplement posé sur un support plus rigide, distinct du dispositif 1, on comprend que le feuillet compressible 2 peut être intégré dans un dispositif plus épais incluant une couche de support rigide, ce qui peut être le cas par exemple pour un accoudoir (définissant une zone d'appui pour l'avant-bras) monté solidaire d'une chaise de bureau ou d'un siège.

Dans le but d'ajuster le comportement de redistribution de pression, la configuration du feuillet 2 pourvu de bulles 5 peut être adaptée par plusieurs paramètres, dont le matériau et l'épaisseur notamment de la pièce de film 3 formant l'enveloppe des bulles 5, le fluide interne des bulles 5, le fluide de la zone interconnectée (fluide complémentaire), l'espacement minimal entre les bulles 5, la taille et la densité des bulles 5, la façon de répartir les bulles 5 dans un même plan et le cas échéant la façon de superposer deux sous-couches SL1, SL2 de bulles 5. Ces paramètres peuvent être ajustés afin de fournir aux utilisateurs des choix de confort différents selon leur degré de sensibilité à la pression exercée sur leur poignet 20 ou éventuellement leur avant-bras.

## Revendications

1. Dispositif (1) de soutien du poignet (20) et/ou de l'avant-bras, notamment sous la forme d'un tapis pour souris bureautique ou clavier, comprenant :

   - un revêtement de protection (11), déformable et définissant un dessus du dispositif (1) ; et
   - une couche de redistribution de pression (12), dans laquelle s'étend une pluralité de bulles (5), la couche de redistribution de pression (12) comprenant :

     - un feuillet compressible (2);
     - un élément flexible, agencé pour définir une face supérieure de la couche de redistribution de pression (12) et définissant un élément de recouvrement du feuillet compressible (2) ;
     - une première pièce de film flexible (3) et une deuxième pièce de film flexible (4), distincts de l'élément flexible, qui s'étendent sous l'élément flexible et parallèlement à cet élément ; des bulles déterminées de la pluralité de bulles étant réparties parallèlement au revêtement de protection (11) et inclues dans l'épaisseur de la couche de redistribution de pression (12), le contenu des bulles (5) consistant en un fluide et étant enveloppé pour chacune des bulles déterminées (5) entre les première et deuxième pièces de film (3, 4), où

   - le feuillet compressible (2) inclut lesdites première et deuxième pièces de film (3, 4) pour envelopper le contenu des bulles (5), et la couche de redistribution de pression (12) comporte
   - un fluide complémentaire du fluide des bulles (5), contenu entre la première pièce de film et l'élément flexible, permettant aux bulles de se déformer grâce à des zones d'espacement entre les bulles qui contiennent le fluide complémentaire ;
   le revêtement de protection (11) étant soit défini par l'élément flexible, soit superposé à la couche de redistribution de pression (12) et conçu et agencé pour fléchir de manière élastique en réponse à une pression exercée sur le dessus du dispositif (1).

2. Dispositif selon la revendication 1, dans lequel les bulles (5) sont espacées les unes par rapport aux autres, le fluide complémentaire étant contenu dans au moins une zone interconnectée (9) qui s'étend entre les bulles (5).

3. Dispositif selon la revendication 1 ou 2, se présentant sous la forme d'un tapis, et dans lequel la zone interconnectée (9) est extérieurement délimitée par une paroi périphérique qui s'étend depuis une base du dispositif (1) jusqu'au revêtement de protection (11), en définissant une circonférence du tapis.

4. Dispositif selon la revendication 1, 2 ou 3, dans lequel :

   - la deuxième pièce de film (4) est reliée à la première pièce de film (3) de façon étanche dans une pluralité de zones annulaires (6) définies chacune autour d'une des bulles déterminées (5).

5. Dispositif selon la revendication 4, dans lequel les bulles (5) ont une même épaisseur dans une configuration non sollicitée au repos du dispositif (1) et appartiennent au feuillet compressible (2) qui résulte d'un assemblage entre la première pièce de film (3) et la deuxième pièce de film (4), le feuillet compressible (2) présentant une épaisseur déterminée (e1) essentiellement définie par l'épaisseur des bulles (5).

6. Dispositif selon la revendication 5, se présentant sous la forme d'un tapis, et dans lequel l'épaisseur totale E définie entre la pièce de film la plus inférieure pour délimiter tout ou partie de la pluralité des bulles (5) et une face supérieure (F1) externe du tapis satisfait la relation suivante :

$$e1 > 0{,}7 * E$$

où e1 désigne l'épaisseur déterminée du feuillet compressible (2).

7. Dispositif selon l'une quelconque des revendications précédentes, dans lequel les bulles (5) sont réparties en rangées (15) parallèles dans la couche de redistribution de pression (12).

8. Dispositif selon l'une quelconque des revendications précédentes, dans lequel le revêtement de protection (11) est imperméable aux liquides.

9. Dispositif selon l'une quelconque des revendications précédentes, comprenant en outre une surface inférieure antidérapante et/ou pourvue d'une couche adhésive (36).

10. Dispositif selon l'une quelconque des revendications précédentes, comprenant une face supérieure (F1) au moins en partie définie par le revêtement de protection (11) et une face inférieure (F2) dont la surface est plus antidérapante que la face supérieure (F1), et dans lequel le revêtement de protection (11) est flexible pour transmettre localement à des bulles (5) du feuillet compressible (2) une pression exercée par le poignet (20) d'un utilisateur pendant une manipulation d'une souris ou d'un clavier de commande.

11. Clavier (30) pourvu d'une zone de travail (Z1) incluant une pluralité de touches de saisie (31) activables sous l'effet d'une pression, **caractérisé en ce que** le clavier (30) comporte le dispositif (1) selon l'une quelconque des revendications précédentes, sous la forme d'une membrane qui recouvre une surface d'appui pour le poignet d'un utilisateur, rigide et adjacente à la zone de travail (Z1), et optionnellement tout ou partie des touches de saisie (31).

12. Utilisation d'un feuillet compressible (2) dans un dispositif (1) de soutien du poignet (20) et/ou de l'avant-bras, notamment sous la forme d'un tapis pour souris et clavier, où le feuillet compressible (2) est intégré sous une couche supérieure de protection (11), déformable, formant un dessus du dispositif (1), le feuillet compressible (2) comprenant des bulles (5), contenant un fluide et résultant de l'assemblage de deux pièces de film flexible 4) et conçu pour fléchir de manière élastique en réponse à une pression exercée sur le dessus du dispositif (1), ce qui permet de définir une couche de redistribution de pression (12) s'étendant parallèlement au revêtement de protection (11),

la couche de redistribution de pression (12) comportant :

- le feuillet compressible (2) incluant les deux pièces de film flexible (3, 4) pour envelopper le contenu des bulles (5) ;
- un élément de recouvrement (11) du feuillet compressible (2), distinct des deux pièces de film flexible (3, 4) ; et
- un fluide complémentaire du fluide des bulles (5), contenu entre le feuillet compressible (2) et l'élément de recouvrement (11), permettant aux bulles de se déformer grâce aux zones d'espacement entre les bulles qui contiennent le fluide complémentaire ; et où le revêtement de protection (11) présente une résistance au poinçonnement supérieure à celle du feuillet compressible (2), et les bulles (5) du feuillet compressible (2) qui s'étendent suivant un même plan ayant une même épaisseur dans une configuration non sollicitée au repos du dispositif (1), le feuillet compressible (2) présentant de préférence une épaisseur déterminée (e1) essentiellement définie par l'épaisseur des bulles (5).

**Patentansprüche**

1. Vorrichtung (1) zum Stützen des Handgelenks (20) und/oder des Unterarms, besonders in Form eines Büromauspads oder einer Tastatur, umfassend:

- eine verformbare Schutzhülle (11), die eine Oberseite der Vorrichtung (1) definiert; und
- eine Druckumverteilungsschicht (12), in der sich eine Vielzahl von Blasen (5) erstreckt, wobei die Druckumverteilungsschicht (12) Folgendes umfasst:
- eine komprimierbare Lage (2);
- ein flexibles Element, das angeordnet ist, um eine Oberseite der Druckumverteilungsschicht (12) zu definieren und ein Abdeckelement der komprimierbaren Lage (2) definiert;
- ein erstes Teil einer flexiblen Folie (3) und ein zweites Teil einer flexiblen Folie (4), die sich von dem flexiblen Element unterscheiden und sich unter dem flexiblen Element und parallel zu diesem Element erstrecken; wobei bestimmte Blasen der Vielzahl von Blasen parallel zu der Schutzhülle (11) verteilt und in der Dicke der Druckumverteilungsschicht (12) eingeschlossen sind,
wobei der Inhalt der Blasen (5) aus einem Fluid besteht und für jede der bestimmten Blasen (5) von dem ersten und zweiten Folienteil (3, 4) umhüllt ist, oder
- wobei die komprimierbare Lage (2) das erste und zweite Folienteil (3,4) einschließt, um den Inhalt der Blasen (5) zu umhüllen, und die Druckumverteilungsschicht (12) ein zusätzliches Fluid des Fluids der Blasen (5) umfasst, das zwischen dem ersten Folienteil und dem flexiblen Element enthalten ist, wodurch sich die Blasen dank Abstandszonen zwischen den Blasen verformen können, die das zusätzliche Fluid enthalten;
wobei die Schutzhülle (11) entweder durch das flexible Element definiert ist oder die Druckumverteilungsschicht (12) überlagert und konzipiert und angeordnet ist, um sich als Reaktion auf einen Druck, der auf die Oberseite der Vorrichtung (1) ausgeübt wird, elastisch zu verbiegen.

2. Vorrichtung nach Anspruch 1, wobei die Blasen (5) voneinander beabstandet sind, wobei das zusätzliche Fluid in mindestens einer verbundenen Zone (9) enthalten ist, die sich zwischen den Blasen (5) erstreckt.

3. Vorrichtung nach Anspruch 1 oder 2, die sich in Form eines Pads präsentiert und wobei die verbundene Zone (9) äußerlich durch eine Umfangswand begrenzt ist, die sich von einer Basis der Vorrichtung (1) bis zu der Schutzhülle (11) erstreckt, wobei sie einen Umfang des Pads definiert.

4. Vorrichtung nach Anspruch 1, 2 oder 3, wobei:

   - das zweite Folienteil (4) mit dem ersten Folienteil (3) dicht in einer Vielzahl von ringförmigen Bereichen (6) verbunden ist, die jeweils um eine der bestimmten Blasen (5) definiert sind.

5. Vorrichtung nach Anspruch 4, wobei die Blasen (5) in einer unbeanspruchten Konfiguration in einem Ruhemodus der Vorrichtung (1), die gleiche Dicke aufweisen und zu der komprimierbaren Lage (2) gehören, die sich aus einem Zusammenfügen des ersten Folienteils (3) und des zweiten Folienteils (4) ergibt, wobei die komprimierbare Lage (2) eine bestimmte Dicke (e1) aufweist, die im Wesentlichen durch die Dicke der Blasen (5) definiert ist.

6. Vorrichtung nach Anspruch 5, die sich in Form eines Pads präsentiert und wobei die Gesamtdicke E, die zwischen dem untersten Folienteil, um alle oder einen Teil der Vielzahl von Blasen (5) zu begrenzen und einer äußeren Oberseite (F1) des Pads definiert ist, die folgende Beziehung erfüllt:

$$e1 > 0{,}7 * E$$

wobei e1 für die bestimmte Dicke der komprimierbaren Lage (2) steht.

7. Vorrichtung nach einem der vorhergehenden Ansprüche, wobei die Blasen (5) in der Druckumverteilungsschicht (12) in parallelen Reihen (15) verteilt sind.

8. Vorrichtung nach einem der vorhergehenden Ansprüche, wobei die Schutzhülle (11) flüssigkeitsundurchlässig ist.

9. Vorrichtung nach einem der vorhergehenden Ansprüche, ferner umfassend eine Innenfläche, die rutschfest und/oder mit einer Haftschicht (36) versehen ist.

10. Vorrichtung nach einem der vorhergehenden Ansprüche, umfassend eine Oberseite (F1), die zumindest teilweise durch die Schutzhülle (11) definiert ist und eine Unterseite (F2), deren Fläche viel rutschfester ist als die Oberseite (F1),
und wobei die Schutzhülle (11) flexibel ist, um lokal auf die Blasen (5) der komprimierbaren Lage (2) einen Druck zu übertragen, der von dem Handgelenk (20) eines Benutzers während der Bedienung einer Maus oder einer Steuertastatur ausgeübt wird.

11. Tastatur (30), die mit einer Arbeitszone (Z1) versehen ist, die eine Vielzahl von Eingabetasten (31) einschließt, die durch die Wirkung eines Drucks aktivierbar sind, **dadurch gekennzeichnet, dass** die Tastatur (30) die Vorrichtung (1) nach einem der vorhergehenden Ansprüche in Form einer Membran umfasst, die eine Auflagefläche für das Handgelenk eines Benutzers, starr und angrenzend an die Arbeitszone (Z1), und gegebenenfalls alle oder einen Teil der Eingabetasten (31) bedeckt.

12. Verwendung einer komprimierbaren Lage (2) bei einer Vorrichtung (1) zum Stützen des Handgelenks (20) und/oder des Unterarms, besonders in Form eines Mauspads und einer Tastatur, wobei die komprimierbare Lage (2) unter einer verformbaren oberen Schutzschicht (11) integriert ist, die eine Oberseite der Vorrichtung (1) bildet, wobei die komprimierbare Lage (2) Blasen (5) umfasst, die ein Fluid enthalten und sich aus dem Zusammenfügen von zwei Teilen einer flexiblen Folie (3, 4) ergibt und konzipiert ist, um sich als Reaktion auf einen Druck, der auf die Oberseite der Vorrichtung (1) ausgeübt wird, elastisch zu verbiegen, was die Definition einer Druckumverteilungsschicht (12) ermöglicht, die sich parallel zu der Schutzhülle (11) erstreckt, wobei die Druckumverteilungsschicht (12) Folgendes umfasst:

- die komprimierbare Lage (2), einschließend die zwei Teile einer flexiblen Folie (3, 4), um den Inhalt der Blasen (5) zu umhüllen;
- ein Abdeckelement (11) der komprimierbaren Lage (2), das sich von den zwei Teilen einer flexiblen Folie (3, 4) unterscheidet; und
- ein zusätzliches Fluid des Fluids der Blasen (5), das zwischen der komprimierbaren Lage (2) und dem Abdeckelement (11) enthalten ist, wodurch sich die Blasen dank Abstandszonen zwischen den Blasen verformen können, die das zusätzliche Fluid enthalten;
und/oder wobei die Schutzhülle (11) einen Durchstanzwiderstand aufweist, der größer als derjenige der komprimierbaren Lage (2) ist, und wobei die Blasen (5) der komprimierbaren Lage (2), die sich auf derselben Ebene erstrecken, in einer unbeanspruchten Konfiguration in einem Ruhemodus der Vorrichtung (1), die gleiche Dicke aufweisen, wobei die komprimierbare Lage (2) vorzugsweise eine bestimmte Dicke (e1) aufweist, die im Wesentlichen durch die Dicke der Blasen (5) definiert ist.

**Claims**

1. Device (1) for supporting the wrist (20) and/or the forearm, in particular in the form of a mat for an office mouse or keyboard, comprising:

- a protective coating (11), which is deformable and defines the top of the device (1); and
- a pressure redistribution layer (12), in which a plurality of bubbles (5) extends, the pressure redistribution layer (12) comprising:
- a compressible sheet (2);
- a flexible element arranged to define an upper face of the pressure redistribution layer (12) and defining an element for covering the compressible sheet (2);
- a first piece of flexible film (3) and a second piece of flexible film (4), separate from the flexible element, which extend under the flexible element and parallel to this element; with set bubbles of the plurality of bubbles being distributed parallel to the protective coating (11) and included in the thickness of the pressure redistribution layer (12),
the content of the bubbles (5) being made up of a fluid and being encapsulated, for each of the set bubbles (5), between the first and second film parts (3, 4), where
- the compressible sheet (2) includes said first and second film parts (3, 4) for encapsulating the content of the bubbles (5), and the pressure redistribution layer (12) comprises a fluid supplementing the fluid of the bubbles (5), contained between the first film part and the flexible element, allowing the bubbles to deform by virtue of spacing zones between the bubbles that contain the supplementary fluid;
the protective coating (11) being either defined by the flexible element or overlaid on the pressure redistribution layer (12) and designed and arranged to resiliently bend in response to a pressure exerted on the top of the device (1).

2. Device according to claim 1, wherein the bubbles (5) are spaced apart from each other, the supplementary fluid being contained in at least one interconnected zone (9) that extends between the bubbles (5).

3. Device according to claim 1 or 2, being in the form of a mat, and wherein the interconnected zone (9) is externally demarcated by a peripheral wall, which extends from a base of the device (1) up to the protective coating (11), defining a circumference of the mat.

4. Device according to claims 1, 2 or 3, wherein:

- the second film part (4) is sealably connected to the first film part (3) in a plurality of annular zones (6) each defined around one of the set bubbles (5).

5. Device according to claim 4, wherein the thickness of the bubbles (5) is the same in an at rest, non-stressed configuration of the device (1) and the bubbles form part of the compressible sheet (2) resulting from an assembly between the first film part (3) and the second film part (4), the compressible sheet (2) having a set thickness (e1) that is basically defined by the thickness of the bubbles (5).

6. Device according to claim 5, being in the form of a mat, and wherein the total thickness E defined between the lowest film part for demarcating all or some of the plurality of bubbles (5) and an upper face (F1) outside the mat complies with the following relation:

$$e1 > 0.7 * E,$$

where e1 denotes the set thickness of the compressible sheet (2).

7.  Device according to any one of the preceding claims, wherein the bubbles (5) are distributed in parallel rows (15) in the pressure redistribution layer (12).

8.  Device according to any one of the preceding claims, wherein the protective coating (11) is liquid-proof.

9.  Device according to any one of the preceding claims, further comprising a lower surface that is non-slip and/or provided with an adhesive layer (36).

10. Device according to any one of the preceding claims, comprising an upper face (F1) at least partly defined by the protective coating (11) and a lower face (F2), the surface of which is more non-slip than the upper face (F1),
    and wherein the protective coating (11) is flexible in order to locally transfer, to bubbles (5) of the compressible sheet (2), a pressure that is exerted by the wrist (20) of a user when controlling a mouse or a control keyboard.

11. Keyboard (30) provided with a work zone (Z1) including a plurality of input keys (31) that can be activated under the effect of a pressure, **characterised in that** the keyboard (30) comprises the device (1) according to any one of the preceding claims, in the form of a membrane that covers a support surface for the wrist of a user, which surface is rigid and adjacent to the work zone (Z1), and optionally all or some of the input keys (31).

12. Use of a compressible sheet (2) in a device (1) for supporting the wrist (20) and/or the forearm, in particular in the form of a mat for a mouse and keyboard, where the compressible sheet (2) is integrated under a deformable upper protective layer (11), forming the top of the device (1), the compressible sheet (2) comprising bubbles (5) containing a fluid and resulting from the assembly of two flexible film parts (3, 4) and designed to resiliently bend in response to a pressure exerted on the top of the device (1), which allows a pressure redistribution layer (12) to be defined that extends parallel to the protective coating (11), the pressure redistribution layer (12) comprising:

    - the compressible sheet (2) including the two flexible film parts (3, 4) for encapsulating the content of the bubbles (5);
    - an element (11) for covering the compressible sheet (2), separate from the two flexible film parts (3, 4); and
    - a fluid supplementing the fluid of the bubbles (5), contained between the compressible sheet (2) and the coverage element (11), allowing the bubbles to deform by virtue of the spacing zones between the bubbles that contain the supplementary fluid;
    and where the protective coating (11) has greater penetration resistance than that of the compressible sheet (2), and the bubbles (5) of the compressible sheet (2) that extend along the same plane have the same thickness in an at rest, non-stressed configuration of the device (1), the compressible sheet (2) preferably having a set thickness (e1) that is basically defined by the thickness of the bubbles (5).

**FIG. 1**

**FIG. 2**

**FIG. 3**

FIG. 4A

FIG. 4B

**FIG. 5**

**FIG. 6**

**FIG. 7**

EP 3 548 999 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5374018 A